# EUROPEAN PATENT APPLICATION

(11) **EP 1 760 652 A1**
(43) Date of publication of application: **07.03.2007**
(21) Application number: 05300703.5
(22) Date of filing: 31.08.2005
(51) Int. Cl.: G06Q 30/00

(54) **Method, system, and recording medium for distributing multimedia content**

(71) Applicant: Thomson Licensing, 92100 Boulogne-Billancourt (FR)
(72) Inventor: Lebegue, Xavier, 75015, Paris (FR); Daugeras, Emmanuel, 92330, Sceaux (FR)
(74) Representative: Thies, Stephan

(57) **Abstract**

The invention relates to a method and a system for distributing multimedia content, and more specifically for distributing audio/video data.

According to the invention, a method and a system for distributing multimedia content, wherein multimedia content is recorded on a recording medium upon request at a recording terminal (20), is characterized in that the recording medium is a prepaid recording medium used for payment of the multimedia content.

## Description

The invention relates to a method, a system, and a recording medium for distributing multimedia content, and more specifically to a method, a system, and a recording medium for distributing audio/video data.

A plurality of such methods, systems, and recording media, especially for renting or selling movies, are known. For example, US 6,584,450 discloses a method for renting items to customers on a subscription basis. Up to a specified number of items are provided to the customer. In response to one or more item delivery criteria being satisfied, such us a return of one or more previously rented items, one or more other items are provided to the customer, wherein a total current number of items provided to the customer does not exceed the specified number. In this approach the items (DVDs) are sent to a customer via mail. After watching a DVD, the customer returns the DVD via mail. A drawback of this approach is that the customer has to wait for some time before he will receive a new DVD after returning a rented DVD.

A different approach is disclosed in US 2004/0064377. According to this document a Kiosk machine is provided that allows customers to browse a movie database, view movie descriptions, and then have a copy of the movie saved to a DVD disk. Payment is effected via credit card. The customer can either purchase or rent a movie. For this purpose, in addition to the movie, payment, time and date information is also written to the DVD before it is provided to the customer. Upon the customer returning the DVD to the Kiosk, the customer is provided with a partial payment credit. A drawback of this approach is that a plurality of recordable DVDs need to be stored in the Kiosk, which increases the size of the Kiosk. In addition, a complicated loading mechanism for the DVDs is necessary. A further drawback is that a large number of micro payments are effected, which increases the operating cost.

It is an object of the present invention to propose a method and a system for distributing multimedia content, which overcome one or more of the above drawbacks.

According to a first aspect of the invention, a method for distributing multimedia content is proposed, wherein multimedia content is recorded on a recording medium upon request at a recording terminal, and wherein the recording medium is a prepaid recording medium used for payment of the multimedia content.

According to a further aspect of the invention, a system for distributing multimedia content is proposed, including a recording terminal for recording multimedia content on a recording medium upon request, wherein the recording medium is a prepaid recording medium used for payment of the multimedia content.

Using a prepaid recording medium, e.g. a prepaid recordable or rewritable DVD, for payment of the multimedia content has the advantage that it is not necessary to store a stock of recording media within a recording terminal, which is advantageous for simplifying the recording terminal and hence for reducing its cost. At the same time, a prepaid recording medium supports payments in rather large steps. For example, a prepaid recording medium may be bought for 20 EUR or USD and later recharged in steps of 10 EUR or USD. This greatly reduces the number of micro payments. The method and the system according to the invention are advantageously used for distributing movies.

Preferably, at the time of recording the multimedia content a value corresponding to a purchase of the multimedia content is debited from the recording medium, which is partly refunded when the recording medium is returned to a recording terminal. On the one hand, this solves the problem that a user pays only a renting fee for the multimedia content, but does not return the multimedia content. On the other hand, this solution leads to considerable return business, as the customer is likely to obtain further multimedia content when returning the previously obtained multimedia content.

Advantageously, the multimedia content is considered as being purchased when the recording medium is not returned to a recording terminal before expiry of a predetermined period of time. This solution ensures that the customer is likely to return to a recording terminal within the predetermined period of time, which leads to a steady return business. When the multimedia content is considered as being purchased, the customer is preferably offered the possibility to transfer the remaining value of the recording medium to another recording medium, or to receive a payout of the remaining value. In addition, a label and/or a case jacket is advantageously provided for the recording medium. These can be printed directly within the kiosk, made available as data for printing at home, or be sent to the customer via delivery services. Of course, other solutions are likewise possible. According to a further approach, when the multimedia content is considered as being purchased, the customer may be offered the option to receive a commercially mastered recording medium with the purchased multimedia content, i.e. the recording medium as sold in stores, preferably in combination with a small surcharge. This can be done by delivery services or by printing a coupon to be redeemed in stores, etc. The prepaid recording medium may then be used for further rentals.

Favorably, multimedia content is stored locally within the recording terminal. In this case it is additionally possible that two or more recording terminals use a shared memory. The locally stored multimedia content will generally be the one which is most frequently requested, and/or which has been requested recently. Multimedia content which is not stored locally is preferably retrieved from one or more central servers. The above solutions allow to offer the customer a large selection of multimedia content, while at the same time reducing the amount of storage space needed for the recording terminals.

According to a further aspect of the invention, a recording medium for recording multimedia content carries a prepaid value used for payment of multimedia content. Such a recording medium is suitable for use with a method or a system according to the invention.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: illustrates a method according to the invention for renting movies;
- Fig. 2: schematically shows a DVD kiosk implementing a method according to the invention; and
- Fig. 3: depicts a network of DVD kiosks.

In the following the invention is explained for a method for renting a movie on a DVD. Of course, the invention is not limited to this example. The invention is likewise applicable to other types of multimedia content, such as music, software, games, pictures, text, or other types of data. Similarly, recording can also be performed on other types of recording media, e.g. other types of optical disks (Compact Disk, BluRay Disk, High Density Digital Versatile Disk, Holographic Disk or Card, etc.), tapes, storage cards, etc.

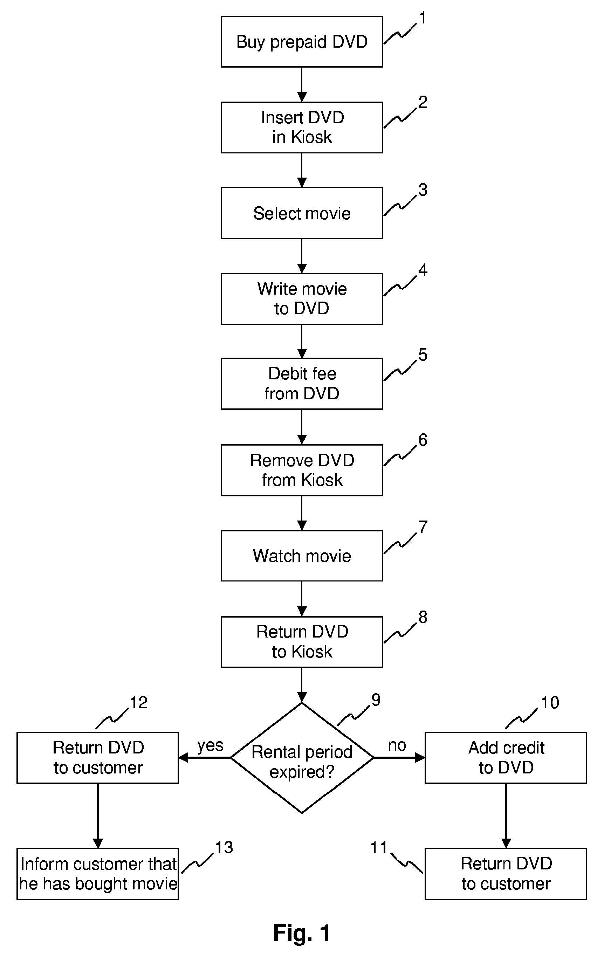

Fig. 1 illustrates a method according to the invention for renting movies. A customer who wants to rent a movie first buys 1 a prepaid, recordable or rewritable DVD. This DVD can preferably be purchased at a plurality of locations, e.g. at gas stations, supermarkets or convenience stores, diners, bus or trains stations etc. The prepaid DVD either has a fixed initial value or is loaded with a variable amount. The amount is recorded on the DVD and is preferably protected. It may be indicated as a monetary value (e.g. EUR or USD), a proprietary value ("movie points", etc.), the number of rentable movies, or the like. When the customer intends to rent a movie, he inserts 2 the prepaid DVD in a recording apparatus of a renting terminal (kiosk). He can then select 3 a movie (or a plurality of movies) from a list of available movies or movies that are available for order. Preferably movie recommendations are given to the customer. After selecting 3 a movie, the movie is written 4 to the prepaid DVD and the corresponding fee is debited 5 from the prepaid DVD. Preferably, the customer also has the possibility to load the prepaid DVD with additional credit if the value of the prepaid DVD is insufficient, e.g. with a credit card, coins and bills, or a further prepaid DVD. Of course, the steps of inserting 2 the prepaid DVD and selecting 3 a movie can also be swapped. The same applies to the steps of writing 4 the movie to the prepaid DVD and debiting 5 the corresponding fee. The recorded prepaid DVD is finally removed 6 from the kiosk.

For renting a movie the fee corresponding to a purchase of the movie is initially debited 5 from the prepaid DVD. When after watching 7 the movie the customer returns 8 the prepaid DVD to the same or another kiosk, it is checked 9 whether the rental period (e.g. 2 weeks) has already expired. If this is not the case, the movie is deleted or inactivated and the customer receives a refund by adding 10 a credit to the prepaid DVD. In this way the ultimately paid fee equals the renting fee. The customer then has the possibility to rent a further movie before the prepaid DVD is returned 11. If, however, the renting period has expired, the customer is informed 12 that he has now bought the movie. In this case he does not receive a refund and the prepaid DVD is returned 13 to him. Preferably, the customer in this case has the possibility to transfer the remaining value of the prepaid DVD to another prepaid DVD, or to receive a payout of the remaining value. In addition, the customer is advantageously offered to provide the prepaid DVD with a label and/or a jewel case jacket.

The method according to the invention offers a plurality of advertising possibilities. For example, advertisements can be included in a brochure sold together with the prepaid DVD, or may be printed on the prepaid DVD. Furthermore, on-screen advertising can be shown at the kiosk, both during interaction with a customer or when the kiosk is inactive. Preferably, the display of the kiosk is used for showing movie trailers when the kiosk is inactive. A further type of possible advertising includes co-marketing by bonus mechanisms. Preferably, specific codes for crediting a customers prepaid DVD can be offered by other businesses. For example, a code printed on a customers pizza receipt can be entered at the kiosk to credit a certain amount to the prepaid DVD. The validity of the code can be limited, e.g. with regard to its duration (60 minutes, 1 day, etc) or the types/titles of movies for which the credit is usable (only a specific genre, a specific studio, a specific title or list of titles, etc.).

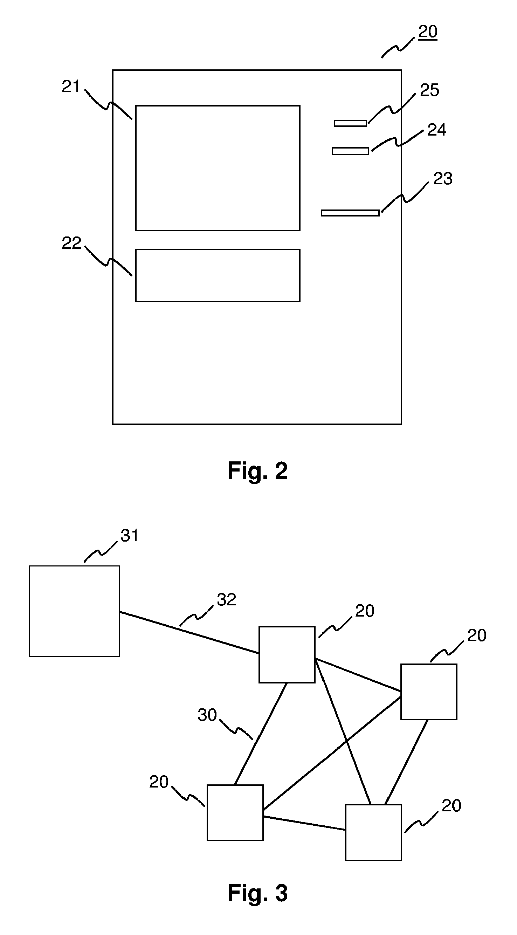

In Fig. 2 a DVD kiosk 20 implementing a method according to the invention is shown schematically. The kiosk 20 has a display 21 and a keyboard 22 for interaction with a customer. Of course, other types of user interface can also be employed, e.g. a touch screen etc. Before or after selecting one or more of the available movies, the customers inserts a special, prepaid recordable or rewritable DVD into a recording device 23 of the kiosk 20. Preferably, the recording device 23 uses a slot loading mechanism, which reduces the risk of damage. However, the recording device 23 can also use a tray for receiving the DVD. After recording the selected movies onto the prepaid DVD, the corresponding fees are debited from the prepaid DVD. Optionally the kiosk may be provided with a coin/bill acceptor 24 and/or credit card reader 25. These allow the customer to load money onto the prepaid DVD for the current or further rentals. The recording device 23 of the kiosk 20 preferably is a high speed recording device, which is able to record the movies with a couple of minutes, preferably within one minute. It may also include a printing device (not shown) for providing the prepaid DVD with a label and/or for printing a jewel case jacket, especially for the case that the user chooses to buy a movie. Preferably, the label and the jewel case jacket can also be ordered via mail-order.

A further optional feature of the kiosk 20 is a repository for prepaid DVDs, which may be used for replacing a prepaid DVD inserted by a user with a new prepaid DVD. This is advantageous for replacing worn DVDs, for rapidly distributing DVDs with new or enhanced security features, or for providing DVDs with an increased storage capacity.

Preferably, at least some of the available movies are stored locally within the kiosk, e.g. on a hard disk drive (not shown), for fast access. By connecting a plurality of adjacent kiosks 20, as shown in Fig. 3, using as an example a gigabit Local Area Network 30, sharing of the available storage space is enabled. This increases the number of locally available movies. The locally available movies are generally those which are most frequently requested. The kiosk 20 preferably offers the possibility to check for the availability of a specific movie at a specific kiosk or within a given area. According to a refinement of the invention the kiosk 20 includes means for retrieving a selected movie, which is not available locally, from one or more central servers 31, e.g. using DSL, fiber or satellite connections 32. The available connections 32 are preferably shared between two or more adjacent kiosks to reduce the number of necessary connections. As alternatives, requested movies can be made available to the kiosk by postal updates using dedicated recording media, or by internet updates using regular ADSL. Especially in these cases the kiosk offers the possibility of pre-ordering movies, as the updates require a certain amount of time. Alternatively or additionally, the possibility of a remote checking for the availability of a specific movie and pre-ordering, e.g. via internet, is provided. In any case advantageously the customer is informed when a pre-ordered movie will be available at a specific kiosk 20. The pre-ordered movie is then available for recording for at least a specified amount of time, e.g. three days. However, if sufficient storage space is available, the pre-ordered movie can also be kept locally for an unlimited time or until the storage space is needed for another movie.

## Claims

1. Method for distributing multimedia content, wherein multimedia content is recorded on a recording medium upon request at a recording terminal (20), and **wherein** the recording medium is a prepaid recording medium used for payment of the multimedia content.

2. Method according to claim 1, **wherein** at the time of recording the multimedia content a value corresponding to a purchase of the multimedia content is debited from the recording medium, which is partly refunded when the recording medium is returned to a recording terminal (20).

3. Method according to claim 1 or 2, **wherein** the multimedia content is considered as being purchased when the recording medium is not returned to a recording terminal (20) before expiry of a predetermined period of time.

4. Method according to claim 3, **further** having the step of offering possibility to transfer the remaining value of the recording medium to another recording medium, or to receive a payout of the remaining value.

5. Method according to claim 3 or 4, **further** having the step of offering the possibility to provide the recording with a label and/or a case jacket.

6. System for distributing multimedia content, **including** a recording terminal (20) for recording multimedia content on a recording medium upon request, wherein the recording medium is a prepaid recording medium used for payment of the multimedia content.

7. Method or system according to one of the preceding claims, **wherein** multimedia content is stored locally within the recording terminal (20).

8. Method or system according to one of the preceding claims, **wherein** two or more recording terminals (20) use a shared memory.

9. Method or system according to one of the preceding claims, **wherein** multimedia content is retrieved from one or more central servers (31).

10. Method or system according to one of the preceding claims, **wherein** the recording medium is a DVD.

11. Method or system according to one of the preceding claims, **wherein** the multimedia content is a movie.

12. Recording medium for recording multimedia content, **characterized in that** it carries a prepaid value used for payment of multimedia content.
